# FASCICULE DE BREVET EUROPEEN

(11) **EP 2 448 713 B1**
(45) Date de publication et mention de la délivrance du brevet: **26.02.2014**
(21) Numéro de dépôt: 10734290.9
(22) Date de dépôt: 21.06.2010
(51) Int. Cl.: B23Q 11/00, B23Q 17/22, B44B 5/00

(54) **MACHINE DE MARQUAGE ET SON PROCÉDÉ DE MISE EN OEUVRE**
MARKIERUNGSMASCHINE UND VERFAHREN ZU IHRER IMPLEMENTIERUNG
MARKING MACHINE, AND METHOD FOR IMPLEMENTING SAME

(30) Priorité: 29.06.2009 FR 0954411
(43) Date de publication de la demande: 09.05.2012
(73) Titulaire: Gravotech Marking, 10600 La Chapelle Saint Luc (FR)
(72) Inventeur: FINOT, Patrick, F-10320 Roncenay (FR); ARROYO, Pierre-Yves, F-10000 Troyes (FR)
(74) Mandataire: Myon, Gérard Jean-Pierre
(86) Numéro de dépôt international: PCT/FR2010/051256
(87) Numéro de publication internationale: WO 2011/001063

(56) Documents cités:
- EP-A2- 0 871 099
- WO-A1-2008/135454
- DE-A1- 3 914 059

## Description

La présente invention concerne une machine de marquage et son procédé de mise en oeuvre.

Une machine de marquage, telle que visée par l'invention, comprend tout d'abord un bâti, ainsi qu'un ensemble de chariot mobile par rapport à ce dernier. A cet effet, cet ensemble peut se déplacer selon deux directions perpendiculaires entre elles, appartenant à un plan généralement horizontal.

L'ensemble de chariot précité comporte tout d'abord un chariot fixe par rapport au bâti, selon la troisième et dernière direction, qui est par conséquent en général verticale. Il est enfin prévu un chariot mobile par rapport au chariot fixe, selon cette troisième direction. A cet effet, le chariot fixe est équipé d'une vis, le long de laquelle peut progresser un organe de liaison taraudé, lequel supporte le chariot mobile.

De plus, il existe une possibilité de débattement selon la troisième direction entre l'organe de liaison et le chariot mobile, laquelle est contrôlée par deux ressorts antagonistes. En général, il est tout d'abord prévu un premier ressort de mise en pression, dont la raideur est réglée par un bouton, ainsi qu'un ressort de compensation.

Le chariot mobile est en outre pourvu d'une broche, susceptible d'être entraînée en rotation par l'intermédiaire de moyens moteurs. Cette broche supporte un outil qui, au sens de l'invention, peut être une fraise de gravure, ou bien un diamant assurant un marquage par rayure.

Dans le cas d'une fraise, cette dernière est en général associée à un nez de butée contre la surface à marquer. L'extrémité active de la fraise fait saillie au-delà de cette butée selon une distance prédéterminée, qui correspond à la profondeur de marquage. La présence des deux ressorts antagonistes contribue à faire varier la pression exercée sur le nez, sans cependant modifier la valeur de la profondeur.

En revanche, dans le cas du diamant, ce dernier pénètre dans la surface à marquer sans être associé à un nez de butée. Dans ces conditions, la pression exercée sur ce diamant, par l'intermédiaire des ressorts, influence directement la valeur de la profondeur de marquage, laquelle peut par conséquent être variable.

L'invention vise plus particulièrement une machine de marquage, du type décrit ci-dessus, pouvant être mise en oeuvre sur des surfaces irrégulières, dont la cote verticale est susceptible de varier. Les pièces à marquer sont par exemple des plaques à surfaces irrégulières, notamment à profil sinusoïdal, comme des plaques ondulées, ou encore à profil sphérique. Dans l'état de la technique connue, ce marquage sur les surfaces irrégulières est permis grâce à une variation de la tension des ressorts antagonistes. Cependant, cette solution implique certains inconvénients. Ainsi, étant donné que la tension des ressorts est modifiée, ceci implique une variation correspondante de la pression exercée sur le nez associé à la fraise, ou bien sur le diamant.

Dans le premier cas, le nez est alors susceptible de rayer la surface à marquer, si la pression exercée est trop élevée. Par ailleurs, dans le cas du diamant, cette variation de pression induit une profondeur de marquage irrégulière.

Par ailleurs, cette solution connue ne permet pas une mise en oeuvre sur des surfaces présentant de grandes variations d'altitude. En effet, il n'est en général pas possible d'atteindre des valeurs de course de l'outil de marquage supérieures à 10 mm, ce qui peut se révéler limitatif.

EP 0 871 099 montre une machine de marquage permettant de maintenir constante la profondeur de marquage malgré des variations de hauteur de la pièce, dont le chariot mobile (4) est fixe par rapport à l'organe de liaison, c'est à dire qu'il n'y a pas de ressorts antagonistes permettant un débattement entre le chariot mobile (4) et l'organe de liaison et le chariot mobile n'est pas pourvu de capteurs. Au contraire, c'est un nez de contact (1) monté sur un support (4) qui a un débattement par rapport au chariot mobile (4). Les capteurs sont montés sur ce support (4).

Ceci étant précisé, l'invention vise à remédier aux différents inconvénients de l'art antérieur évoqués ci-dessus.

A cet effet, elle a pour objet une machine de marquage comprenant un bâti et un ensemble de chariot équipé d'un outil de marquage, cet ensemble de chariot étant mobile par rapport au bâti selon deux premières directions perpendiculaires entre elles, cet ensemble de chariot comprenant un chariot fixe, fixe par rapport au bâti selon une troisième direction, perpendiculaire aux deux premières directions, ainsi qu'un chariot mobile, mobile par rapport au chariot fixe selon ladite troisième direction, cette machine comprend en outre un organe de liaison assurant la liaison entre le chariot fixe et le chariot mobile, des moyens de déplacement permettant le déplacement de l'organe de liaison par rapport au chariot fixe, ainsi que deux ressorts antagonistes permettant un débattement entre le chariot mobile et l'organe de liaison, selon ladite troisième direction,
caractérisée en ce que le chariot mobile est pourvu de deux capteurs propres à coopérer avec une zone de détection de l'organe de liaison, ces deux capteurs étant disposés de part et d'autre de cette zone de détection dans une position neutre, et la machine comprend en outre des moyens de commande, propres à déplacer l'organe de liaison par rapport au chariot fixe, lorsque l'un des capteurs détecte la présence de la zone de détection, en direction de l'autre de ces capteurs.

Selon d'autres caractéristiques de l'invention :
- les moyens de commande sont reliés aux moyens de déplacement par l'intermédiaire d'une ligne de commande, de manière à actionner ces moyens de déplacement lors de la détection de la zone de détection par l'un des capteurs.
- les deux capteurs sont séparés, selon la troisième direction, par une distance comprise entre 10 et 20 mm, notamment entre 14 et 16 mm, en particulier voisine de 15 mm ;
- la zone de détection de l'organe de liaison présente une dimension, prise selon la troisième direction, qui est comprise entre 9 et 19 mm, de préférence entre 13 et 15 mm, en particulier voisine de 14 mm ;
- la différence (D - d) est comprise entre 0,5 et 2 mm, notamment entre 0,8 et 1,2 mm, en particulier voisine de 1 mm ;
- les moyens de commande sont propres à déplacer l'organe de liaison par rapport au chariot fixe, lors de la détection par l'un des capteurs, selon une valeur égale à (D - d) / 2 ;
- les capteurs sont de nature optique, ou bien mécanique ;
- les deux capteurs sont des capteurs optiques, dont chacun est propre à émettre un faisceau optique, alors que la zone de détection est une lame recourbée présentant deux extrémités, chacune de ces extrémités étant propres à coopérer avec un faisceau optique correspondant.

L'invention a également pour objet un procédé de mise en oeuvre de la machine de marquage ci-dessus, comprenant les étapes suivantes :
- on détecte la présence de la zone de détection de l'organe de liaison, au droit de l'un des capteurs,
- on commande, par l'intermédiaire des moyens de commande, les moyens de déplacement de sorte qu'ils déplacent l'organe de liaison en direction de l'autre de ces capteurs.

L'invention va être décrite ci-après, en référence aux dessins annexés, donnés uniquement à titre d'exemple non limitatif, dans lesquels :
- la figure 1 est une vue en perspective, illustrant une machine de marquage conforme à l'invention ;
- la figure 2 est une vue de face à plus grande échelle, illustrant un ensemble de chariot appartenant à la machine de la figure 1 ;
- la figure 3 est une vue en perspective à bien plus grande échelle, illustrant des capteurs appartenant à cet ensemble de chariot ;
- la figure 4 est une vue de face, illustrant les capteurs de la figure 3 ;
- les figures 5 et 6 sont des vues de face, illustrant la progression de cet ensemble de chariot le long de surfaces irrégulières ; et
- les figures 7 et 8 sont des vues de détail des zones VII et VIII sur les figures 5 et 6.

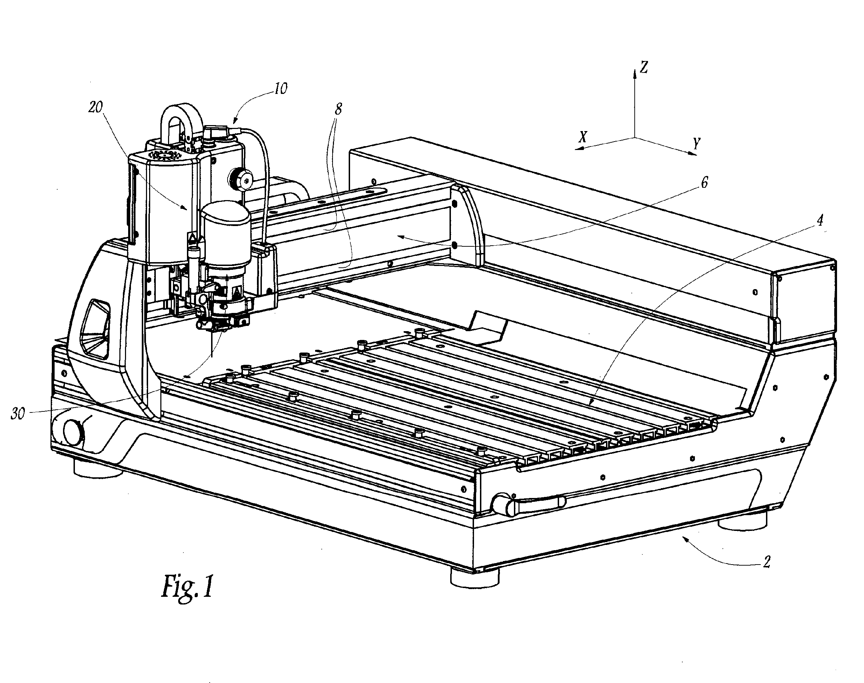

La machine de marquage conforme à l'invention, illustrée sur la figure 1, comprend de façon habituelle un bâti désigné dans son ensemble par la référence 2. Ce dernier définit une table 4 de réception d'une pièce à marquer, qui n'est pas représentée. De plus, un support 6 est monté mobile par rapport au bâti 2, selon une direction notée Y, alors qu'un ensemble de chariot 10 est monté mobile sur ce support 6. De façon plus précise, cet ensemble de chariot 10 est susceptible de coulisser le long de glissières 8, ménagées dans le support 6, selon une direction X, perpendiculaire à celle Y évoquée ci-dessus. Par conséquent, l'ensemble de chariot 10 peut être déplacé par rapport au bâti 2, selon deux directions X et Y perpendiculaires entre elles.

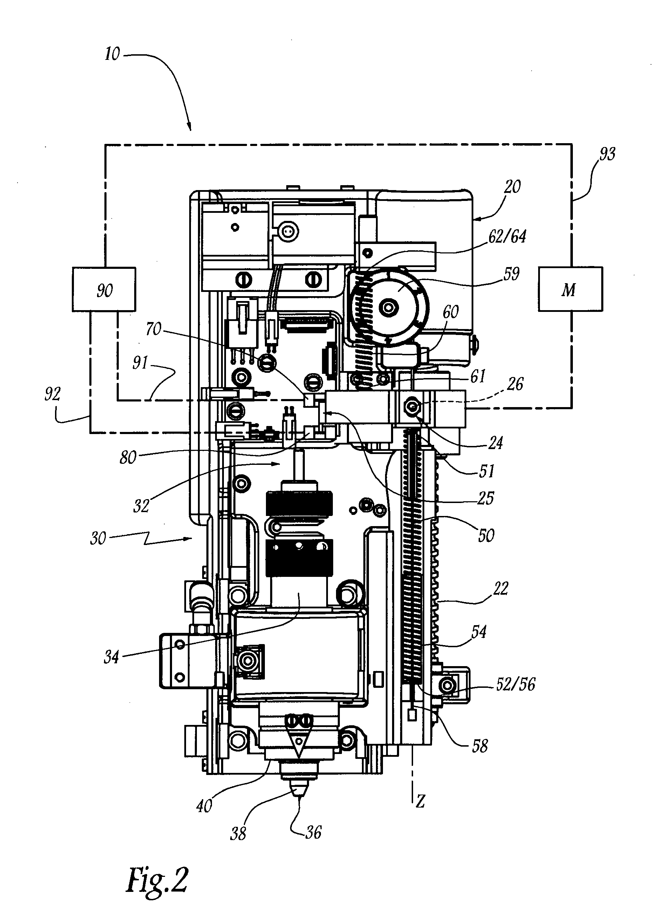

De façon habituelle, comme illustré notamment à la figure 2, l'ensemble de chariot 10 comprend un chariot fixe 20, ainsi qu'un chariot mobile 30. Le chariot fixe 20, tout en étant coulissant par rapport au support 6 selon la direction Y, est cependant lié à ce support selon la troisième direction, notée Z, qui correspond à la direction verticale lorsque la machine repose sur un plan de travail. De plus, le chariot mobile 30 est susceptible de se déplacer par rapport au chariot fixe 20, selon cette direction Z.

A cet effet, de façon connue en soi, le chariot fixe est équipé d'une vis d'entraînement 22, s'étendant selon un axe principal parallèle à Z. Cette vis 22 coopère avec un organe de liaison 24, qui est pourvu d'un orifice taraudé 26. Des moyens moteurs M, représentés de façon schématique, permettent la mise en rotation relative de la vis 22 et des parois de l'orifice 26, ce qui induit le coulissement de l'organe de liaison 24 le long de cette vis 22, selon la direction Z.

De manière également habituelle, le chariot mobile comprend un corps 32, lequel supporte une broche 34 pourvue d'un outil de marquage, qui est en l'occurrence une fraise 36. De façon classique, la broche supporte également un nez 38 pourvue d'une face de butée, destinée à venir en appui contre une pièce à marquer. Enfin, des moyens moteurs non représentés permettent la rotation de la broche par rapport au corps 32, de manière habituelle.

De plus, le nez 38 est mobile axialement par rapport à la broche, et donc par rapport à la fraise 36, selon la direction principale de ce dernier, grâce à un vernier 40. Dans ces conditions, comme cela est bien connu, le vernier 40 permet de déplacer le nez 38 par rapport à la fraise 36, de façon à modifier la dimension de la zone en saillie de cette fraise par rapport au nez et, par conséquent, à faire varier la profondeur de marquage.

A titre de variante non représentée, l'outil peut être, non pas une fraise 36, mais un diamant assurant un marquage par rayure. Dans ce cas, la broche n'est pas pourvue de nez, de sorte que la profondeur de marquage est directement impartie par l'action de deux ressorts antagonistes, qui vont être décrits dans ce qui suit.

De manière classique, il existe une possibilité de débattement, selon la direction Z, entre le corps 32 et l'organe de liaison 24. A cet effet, les deux ressorts antagonistes, évoqués ci-dessus, assurent le contrôle de ce débattement.

De façon plus précise, un premier ressort 50, dit de pression, présente une première extrémité 51 prenant appui contre l'organe de liaison, ainsi qu'une seconde extrémité 52, laquelle est reçue dans une gaine 54 et prend appui contre une butée 56 du corps 32. La raideur de ce ressort peut être modifiée, de manière classique, par un câble tendeur 58, associé à un bouton de mise en pression 59.

Le second ressort 60 présente une première extrémité 61 prenant appui contre l'organe de liaison 24, ainsi qu'une seconde extrémité 62 prenant appui contre une butée 64 du corps. Comme le montre la figure 2, ces deux ressorts 50 et 60 s'étendent de part et d'autre de l'organe de liaison, en l'occurrence au-dessous de ce dernier pour le ressort 50 et au-dessus de cet organe 24 en ce qui concerne le ressort 60.

Comme cela ressort de ce qui précède, la coopération de la vis 22 et de l'organe de liaison taraudé 24 permet de déplacer le chariot mobile par rapport au chariot fixe, de façon à faire varier la position dite neutre entre ces deux chariots, à savoir indépendante de l'action des ressorts. Puis, à partir de cette position neutre, les deux ressorts 50 et 60 autorisent un débattement du corps 32 par rapport à l'organe de liaison 24. On rappellera que, dans l'état de la technique connue, cette action des ressorts permet de compenser les irrégularités éventuelles de la surface à marquer.

Conformément à l'invention, le corps 32 est pourvu de deux capteurs 70 et 80, dénommés respectivement haut et bas en référence à leur position sur les figures. Ces capteurs permettent de détecter la présence éventuelle de la surface de l'organe de liaison 24, au droit de ces capteurs. A cet effet, ces capteurs sont par exemple de nature optique, ou encore mécanique.

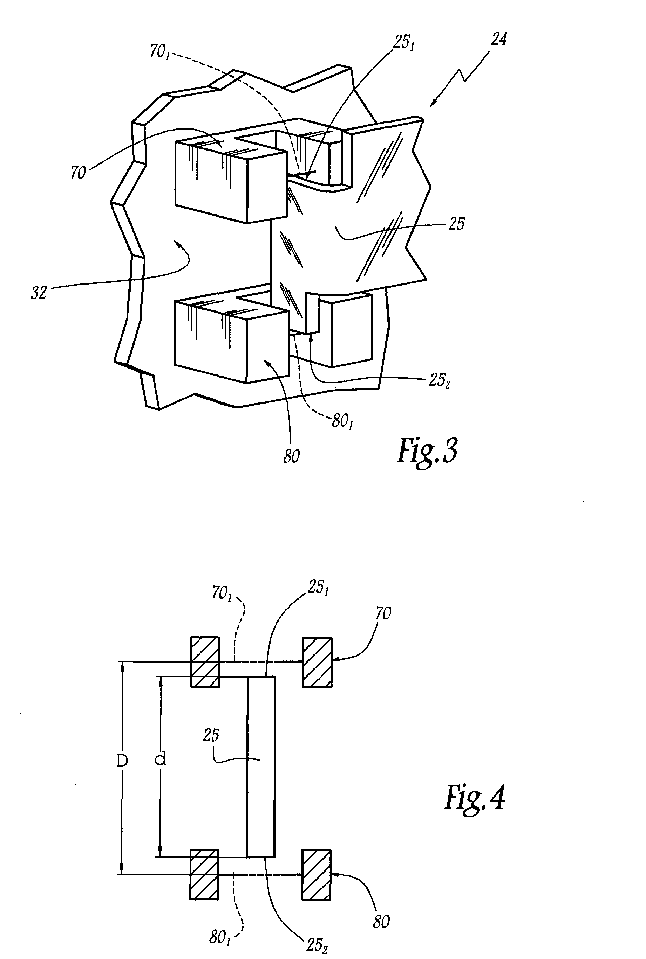

Dans l'exemple illustré, comme représenté de façon plus précise aux figures 3 et 4, ces capteurs sont de nature optique. Chacun de ces capteurs 70 et 80 émet un faisceau optique 70₁ et 80₁, destiné à coopérer avec une zone de détection de l'organe de liaison 24. Dans l'exemple illustré, cette zone de détection est formée par une lame de décodage 25, de forme recourbée, qui s'étend en direction du corps 32. Les extrémités supérieure 25₁ et inférieure 25₂ de cette lame sont propres à coopérer, de façon connue en soi, avec un faisceau optique respectif 70₁ ou 80₁.

En référence à la figure 4, laquelle est une vue schématique de face des capteurs et de la lame, on note D la distance selon la direction Z séparant les deux capteurs, à savoir leurs faisceaux optiques 70₁ et 80₁. Parallèlement, on note d la dimension de la lame 25, selon cette même direction, à savoir la distance séparant les deux extrémités 25₁ et 25₂.

De façon avantageuse, la valeur de D est comprise entre 10 et 20 mm, notamment entre 14 et 16 mm, en particulier voisine de 15 mm. De plus, la valeur de d est avantageusement comprise entre 9 et 19 mm, notamment entre 13 et 15 mm, en particulier voisine de 14 mm. Enfin, la valeur de la différence (D - d) est avantageusement comprise entre 0,5 et 2 mm, en particulier entre 0,8 et 1,2 mm, notamment voisine de 1 mm.

Il est en outre prévu des moyens de commande, associés aux deux capteurs 70 et 80. A cet effet, un organe de commande 90, représenté de façon schématique, est relié à ces deux capteurs par deux lignes respectives 91 et 92. Enfin, cet organe de commande 90 est relié, par une ligne supplémentaire 93, aux moyens moteurs M permettant la mise en mouvement de l'organe de liaison 24 le long de la vis d'entraînement 22.

Ces moyens de commande 90 sont adaptés pour réguler la position de l'organe de liaison 24, par rapport aux deux capteurs 70 et 80. De façon plus précise, lorsque l'un 70 ou 80 des capteurs détecte la présence de la lame de décodage 25 appartenant à l'organe de liaison, les moyens de commande 90 initient l'actionnement du moteur M, afin que cette lame s'éloigne du capteur considéré, en direction de l'autre 80 ou 70 de ces capteurs. La course de ce déplacement est avantageusement égale à la moitié de la différence (D - d). Ceci permet de ramener la lame 25 dans une position médiane, entre les deux capteurs.

L'utilisation de la machine de marquage, décrite ci-dessus, va maintenant être explicitée dans ce qui suit.

On fait tout d'abord descendre l'ensemble de chariot 10, jusqu'à ce que l'extrémité de l'outil 36 vienne en contact avec la pièce à marquer. On établit également une prise de valeur de référence, selon la direction Z, entre les deux capteurs et l'organe de liaison. Puis, on place l'organe de liaison dans une position médiane, entre les deux capteurs 70 et 80.

Si l'opération de gravure se déroule sur une surface sensiblement plane, il n'y a globalement pas de mouvement relatif, selon la direction Z, entre l'organe de liaison 34 et le corps 32 du chariot mobile. Dans ces conditions, il n'y a pas de détection de la lame 25 de l'organe de liaison par les capteurs 70 et 80, de sorte que la position de cet organe de liaison 24 ne varie pas par rapport à la vis 22. Ceci correspond à la position neutre, illustrée sur les figures 3 et 4.

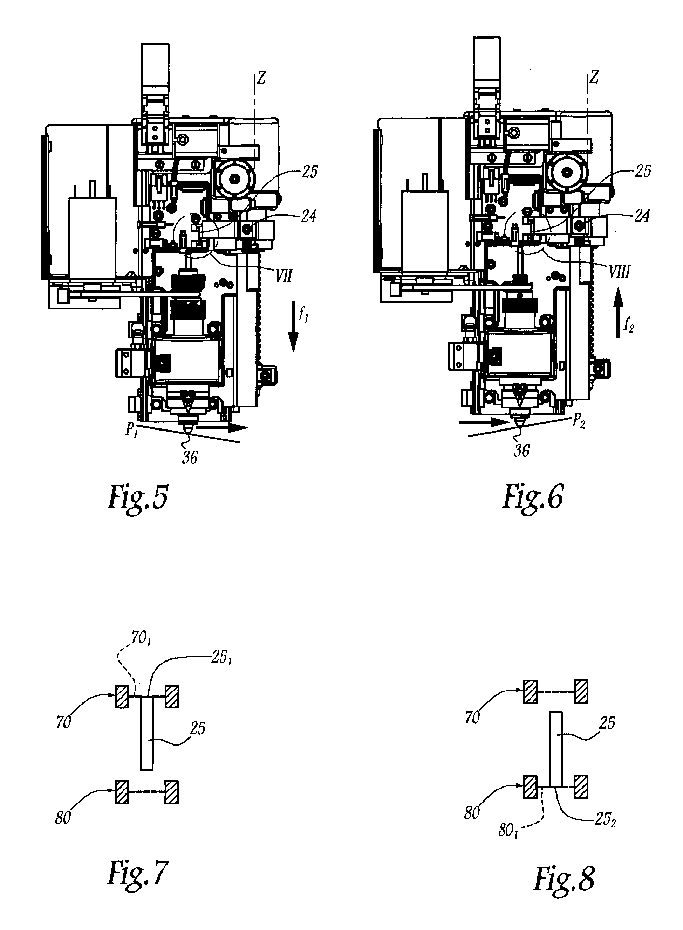

Puis, si la gravure est effectuée sur une pente descendante P₁ (figure 5), le corps et l'outil 36 sont plaqués contre la surface à marquer, sous l'action des ressorts 50 et 60, de sorte qu'ils ont tendance à descendre. En revanche, au moins dans un premier temps, l'altitude de l'organe de liaison 24 ne varie pas. Si ce mouvement descendant se poursuit, le capteur haut 70 détecte à un moment donné la présence de la lame 25 (figure 7).

Dans ce cas, comme décrit ci-dessus, les moyens de commande 90 mettent en marche le moteur M, afin que l'organe de liaison descende, le long de la vis 22, en direction du capteur bas 80, selon la flèche f₁. Ce dernier déplacement permet en outre de rééquilibrer la tension des ressorts 70 et 80.

Si l'outil continue à rencontrer un profil descendant de la pièce, après la première phase de déplacement de l'organe de liaison 24 le long de la vis 22, le capteur haut 70 détecte à nouveau la présence de cette lame 25. Dans ces conditions, il déclenche un déplacement supplémentaire de l'organe de liaison le long de la vis 22, afin qu'il soit dirigé vers le capteur bas 80. Ce repositionnement de la lame 25 de l'organe de liaison 24 entre les deux capteurs 70 et 80 peut se poursuivre, jusqu'à ce que cet organe 24 arrive au voisinage de l'extrémité inférieure de la vis d'entraînement 22.

En supposant maintenant (figure 6) que la gravure s'opère sur une pente ascendante P₂, ceci induit une remontée correspondante de l'outil 36 et du corps 32. Dans ces conditions, de façon similaire à ce qui a été décrit ci-dessus, le capteur bas 80 détecte la présence de la lame 25 (figure 8), de sorte que l'organe de commande 90 initie la mise en marche du moteur M. Ce dernier déplace alors l'organe de liaison 24 vers le haut, le long de la vis 22, afin que la lame 25 retrouve une position médiane entre les deux capteurs (flèche f₂). Comme évoqué ci-dessus, ce mouvement ascendant peut se poursuivre jusqu'à ce que l'organe de liaison 24 se trouve au voisinage de l'extrémité supérieure de la vis 22.

L'invention permet d'atteindre les objectifs précédemment mentionnés.

Ainsi, la machine de marquage conforme à l'invention est, d'une part, susceptible d'opérer sur des surfaces présentant des variations d'altitude bien supérieures à celles de l'art antérieur. On rappellera que, dans l'état de la technique, la possibilité de marquage sur des surfaces irrégulières est uniquement autorisée par la présence des ressorts. Au contraire, l'invention tire parti de la course de l'organe de liaison le long de la vis, en vue d'un tel marquage. Par conséquent, l'invention permet de graver sur des surfaces non planes présentant des différences d'altitudes allant jusqu'à environ 70 mm. Ceci est à comparer avec l'art antérieur, dans lequel la différence d'altitudes permise n'est en général pas supérieure à 10 mm. On notera en outre que le marquage conforme à l'invention peut être opéré en continu le long de telles surfaces irrégulières.

D'autre part, l'invention garantit une qualité de marquage supérieure à celle constatée dans l'art antérieur. En effet, dans l'invention, le déplacement le long de surfaces irrégulières est permis par la mise en mouvement de l'organe de liaison le long de la vis. Ainsi, lors de ce déplacement, les variations de la pression exercée par les ressorts antagonistes sont bien inférieures à celles nécessaires dans la mise en oeuvre de l'art antérieur. En d'autres termes, le marquage conforme à l'invention est en permanence réalisé dans une position voisine de la position neutre, ce qui garantit une qualité de marquage sensiblement constante. Ainsi, dans le cas de la fraise, le nez de butée n'est pas de nature à dégrader de façon intempestive la pièce. Par ailleurs, dans le cas du diamant, l'épaisseur de rayure est sensiblement invariante.

## Revendications

1. Machine de marquage comprenant un bâti (2) et un ensemble de chariot (10) équipé d'un outil de marquage (6), cet ensemble de chariot (10) étant mobile par rapport au bâti (2) selon deux premières directions (X, Y) perpendiculaires entre elles, cet ensemble de chariot comprenant un chariot fixe (20), fixe par rapport au bâti selon une troisième direction (Z), perpendiculaire aux deux premières directions, ainsi qu'un chariot mobile (30), mobile par rapport au chariot fixe selon ladite troisième direction, cette machine comprenant en outre un organe de liaison (24) assurant la liaison entre le chariot fixe et le chariot mobile, des moyens de déplacement (M) permettant le déplacement de l'organe de liaison par rapport au chariot fixe, ainsi que deux ressorts antagonistes (50, 60) permettant un débattement entre le chariot mobile (30) et l'organe de liaison (24), selon ladite troisième direction (Z),
**caractérisée en ce que** le chariot mobile (30) est pourvu de deux capteurs (70, 80) propres à coopérer avec une zone de détection (25) de l'organe de liaison (24), ces deux capteurs étant disposés de part et d'autre de cette zone de détection (25) dans une position neutre, et la machine comprend en outre des moyens de commande (90), propres à déplacer l'organe de liaison (24) par rapport au chariot fixe, lorsque l'un (70, 80) des capteurs détecte la présence de la zone de détection (25), en direction de l'autre (80, 70) de ces capteurs.

2. Machine selon la revendication 1, **caractérisée en ce que** les moyens de commande (90) sont reliés aux moyens de déplacement (M) par l'intermédiaire d'une ligne de commande, de manière à actionner ces moyens de déplacement lors de la détection de la zone de détection (25) par l'un des capteurs.

3. Machine selon la revendication 1 ou 2, **caractérisée en ce que** les deux capteurs sont séparés, selon la troisième direction (Z), par une distance (D) comprise entre 10 et 20 mm, notamment entre 14 et 16 mm, en particulier voisine de 15 mm.

4. Machine selon l'une des revendications précédentes, **caractérisée en ce que** la zone de détection (25) de l'organe de liaison (24) présente une dimension (d), prise selon la troisième direction (Z), qui est comprise entre 9 et 19 mm, de préférence entre 13 et 15 mm, en particulier voisine de 14 mm.

5. Machine selon les revendications 3 et 4, **caractérisée en ce que** la différence (D - d) est comprise entre 0,5 et 2 mm, notamment entre 0,8 et 1,2 mm, en particulier voisine de 1 mm.

6. Machine selon la revendication précédente, **caractérisée en ce que** les moyens de commande (90) sont propres à déplacer l'organe de liaison (24) par rapport au chariot fixe (20), lors de la détection par l'un des capteurs, selon une valeur égale à (D - d) / 2.

7. Machine selon l'une quelconque des revendications précédentes, **caractérisée en ce que** les capteurs sont de nature optique, ou bien mécanique.

8. Machine selon l'une des revendications précédentes, **caractérisée en ce que** les deux capteurs (70, 80) sont des capteurs optiques, dont chacun est propre à émettre un faisceau optique, alors que la zone de détection (25) est une lame recourbée présentant deux extrémité (25₁, 25₂), chacune de ces extrémités étant propres à coopérer avec un faisceau optique correspondant.

9. Procédé de mise en oeuvre de la machine de marquage conforme à l'une quelconque des revendications précédentes, comprenant les étapes suivantes :
- on détecte la présence de la zone de détection (25) au droit de l'un (70, 80) des capteurs,
- on commande, par l'intermédiaire des moyens de commande (90), les moyens de déplacement (M) de sorte qu'ils déplacent l'organe de liaison en direction de l'autre (80, 70) de ces capteurs.

## Patentansprüche

1. Markierungsmaschine, die ein Gestell (2) und eine Wagenanordnung (10) umfasst, die mit einem Markierungswerkzeug (6) ausgerüstet ist, wobei diese Wagenanordnung (10) in Bezug auf das Gestell gemäß zwei ersten, senkrecht zueinander stehenden Richtungen (X, Y) bewegbar ist, wobei diese Wagenanordnung einen in Bezug auf das Gestell gemäß einer dritten Richtung (Z), senkrecht zu den zwei ersten Richtungen feststehenden Wagen (20) sowie einen in Bezug auf den feststehenden Wagen gemäß der dritten Richtung beweglichen Wagen (30) umfasst, wobei diese Maschine außerdem ein Verbindungselement (24), das die Verbindung zwischen dem feststehenden Wagen und dem beweglichen Wagen sicherstellt, Mittel zum Verschieben (M), die die Verschiebung des Verbindungselements in Bezug auf den feststehenden Wagen gestattet, sowie zwei Ausgleichfedern (50, 60), die eine Auslenkung zwischen dem beweglichen Wagen (30) und dem Verbindungselement (24) gemäß der dritten Richtung (Z) gestatten, umfasst,
**dadurch gekennzeichnet, dass** der bewegliche Wagen (30) mit zwei Sensoren (70, 80) versehen ist, die geeignet sind, mit einer Detektionszone (25) des Verbindungselements (24) zusammenzuarbeiten, wobei diese zwei Sensoren beidseitig dieser Detektionszone (25) in einer neutralen Position angeordnet sind, und die Maschine außerdem Steuermittel (90) umfasst, die, wenn einer (70, 80) der Sensoren das Vorhandensein der Detektionszone (25) detektiert, geeignet sind, das Verbindungselement (24) in Bezug auf den feststehenden Wagen in Richtung des anderen (80, 70) dieser Sensoren zu bewegen.

2. Maschine nach Anspruch 1, **dadurch gekennzeichnet, dass** die Steuermittel (90) mit den Mitteln (M) zur Verschiebung über eine Steuerleitung verbunden sind, derart, dass diese Mittel zur Verschiebung bei der Detektion der Detektionszone (25) durch einen der Sensoren betätigt werden.

3. Maschine nach Anspruch 1 oder 2, **dadurch gekennzeichnet, dass** die zwei Detektoren gemäß der dritten Richtung (Z) durch einen Abstand (D) zwischen 10 und 20 mm, vor allem zwischen 14 und 16 mm, insbesondere benachbart zu 15 mm getrennt sind.

4. Maschine nach einem der vorhergehenden Ansprüche, **dadurch gekennzeichnet, dass** die Zone (25) zur Detektion des Verbindungselements (24) eine Abmessung (d), gemäß der dritten Richtung (Z) genommen, aufweist, die zwischen 9 und 19 mm, vorzugsweise zwischen 13 und 15 mm, insbesondere benachbart zu 14 mm liegt.

5. Maschine nach einem der Ansprüche 3 und 4, **dadurch gekennzeichnet, dass** die Differenz (D-d) zwischen 0,5 und 2 mm, vorzugsweise zwischen 0,8 und 1,2 mm, insbesondere benachbart zu 1 mm liegt.

6. Maschine nach dem vorhergehenden Anspruch, **dadurch gekennzeichnet, dass** die Steuermittel (90) geeignet sind, das Verbindungselement (24) in Bezug auf den feststehenden Wagen (20) bei der Detektion durch einen der Sensoren gemäß einem Wert gleich (D-d)/2 zu verschieben.

7. Maschine nach einem beliebigen der vorhergehenden Ansprüche, **dadurch gekennzeichnet, dass** die Sensoren optischer Natur oder auch mechanischer Natur sind.

8. Maschine nach einem der vorhergehenden Ansprüche, **dadurch gekennzeichnet, dass** die zwei Sensoren (70, 80) optische Sensoren sind, von denen jeder geeignet ist, einen optischen Lichtstrahl auszusenden, wobei die Detektionszone (25) eine gebogene Klinge ist, die zwei Enden (25₁, 25₂) aufweist, wobei diese Enden geeignet sind, mit einem korrespondierenden optischen Strahl zusammenzuarbeiten.

9. Verfahren zur Anwendung der Markierungsmaschine nach einem beliebigen der vorhergehenden Ansprüche, folgende Schritte umfassend:
- das Vorhandensein der Detektionszone (25) wird an einem (70, 80) der Sensoren detektiert,
- mittels der Steuermittel werden die Mittel (M) zur Verschiebung derart gesteuert, dass sie das Verbindungselement in Richtung des anderen (80, 70) dieser Sensoren bewegen.

## Claims

1. Marking machine comprising a frame (2) and a carriage unit (10) equipped with a marking tool (6), the said carriage unit (10) being movable in relation to the frame (2) in two first directions (X, Y) which are perpendicular to one another, the said carriage unit comprising a fixed carriage (20) which is fixed in relation to the frame in a third direction (Z) perpendicular to the two first directions, as well as a movable carriage (30) which is movable in relation to the carriage which is fixed in the said third direction, the said machine further comprising a linking component (24) which brings about the link between the fixed carriage and the movable carriage, displacing means (M) which permit displacement of the linking component in relation to the fixed carriage, as well as two opposing springs (50, 60) which permit travel between the movable carriage (30) and the linking component (24) in the said third direction,
**characterised in that** the movable carriage (30) is provided with two sensors (70, 80) which are adapted to cooperate with a detection zone (25) belonging to the linking component (24), the said two sensors being disposed on either side of the said detection zone (25) in a neutral position, and the machine further comprises control means (90) which are adapted to displace the linking component (24) in relation to the fixed carriage, when one (70, 80) of the sensors detects the presence of the detection zone (25), towards the other (80, 70) of the said sensors.

2. Machine according to Claim 1, **characterised in that** the control means (90) are connected to the displacing means (M) via a control line, in such a way as to activate the said displacing means when the detection zone (25) is detected by one of the sensors.

3. Machine according to Claim 1 or 2, **characterised in that** the two sensors are separated, in the third direction (Z), by a distance (D) of between 10 and 20 mm, especially between 14 and 16 mm, in particular in the region of 15 mm.

4. Machine according to one of the preceding claims, **characterised in that** the detection zone (25) belonging to the linking component (24) has a dimension (d), viewed in the third direction (Z), which is between 9 and 19 mm, preferably between 13 and 15 mm, in particular in the region of 14 mm.

5. Machine according to claims 3 and 4, **characterised in that** the difference (D - d) is between 0.5 and 2 mm, especially between 0.8 and 1.2 mm, in particular in the region of 1 mm.

6. Machine according to the preceding claim, **characterised in that** the control means (90) are adapted to displace the linking component (24) in relation to the fixed carriage (20), when detected by one of the sensors, by a value equal to (D - d)/2.

7. Machine according to any of the preceding claims, **characterised in that** the sensors are of an optical, or else mechanical, nature.

8. Machine according to one of the preceding claims, **characterised in that** the two sensors (70, 80) are optical sensors, each of which is adapted to emit an optical beam, whereas the detection zone (25) is a bent plate having two ends (25₁, 25₂), each of the said ends being adapted to cooperate with a corresponding optical beam.

9. Method of using the marking machine in accordance with any of the preceding claims, said method comprising the following stages:
- the presence of the detection zone (25) is detected at right angles with one (70, 80) of the sensors;
- the displacing means (M) are controlled, via the control means (90), in such a way that they displace the linking component towards the other (80, 70) of the said sensors.
